# EUROPEAN PATENT SPECIFICATION

(11) **EP 0 539 028 B1**
(45) Date of publication and mention of the grant of the patent: **05.08.1998**
(21) Application number: 92308693.8
(22) Date of filing: 24.09.1992
(51) Int. Cl.: H04M 3/22

(54) **Maintenance termination unit for ISDN**
ISDN-Terminierungseinheit für Wartungszwecke
Module de terminaison pour service d'entretien pour ISDN

(30) Priority: 04.10.1991 US 771664
(43) Date of publication of application: 28.04.1993
(73) Proprietor: AT&T Corp., New York, NY 10013-2412 (US)
(72) Inventor: DeBalko, George Andrew, Long Valley, New Jersey 07853 (US)
(74) Representative: Buckley, Christopher Simon Thirsk

(56) References cited:
- DE-A- 3 340 396
- GB-A- 2 086 186
- US-A- 4 374 307

## Description

This invention relates to Maintenance Termination Units (MTUs).

Maintenance termination units are utilized to disconnect the customer from the telecommunications network in order to determine if any problems which exist are in the customer equipment or in the network equipment. Present Plain Old Telephone Service (POTS) MTUs generally rely on the presence of a DC current on the line to close a sold state switch when the customer is off-hook.

Integrated Services Digital Network (ISDN) is a digital transmission system which will provide voice, data and video information over customer lines. One of the problems with such a network is how to provide an MTU in the customer loop. Since there is sometimes no current to the customer, use of standard MTUs would result in a disconnection while the customer is off-hook.

According to this invention there is provided a maintenance termination unit as claimed in claim 1.

The invention will now be described with reference to the accompanying drawing in which:
FIG. 1 is a schematic circuit diagram of an MTU embodying the invention;
FIG. 2 is a schematic circuit diagram of another MTU embodying the invention; and
FIG. 3 is a schematic circuit diagram of a portion of an MTU embodying the invention.

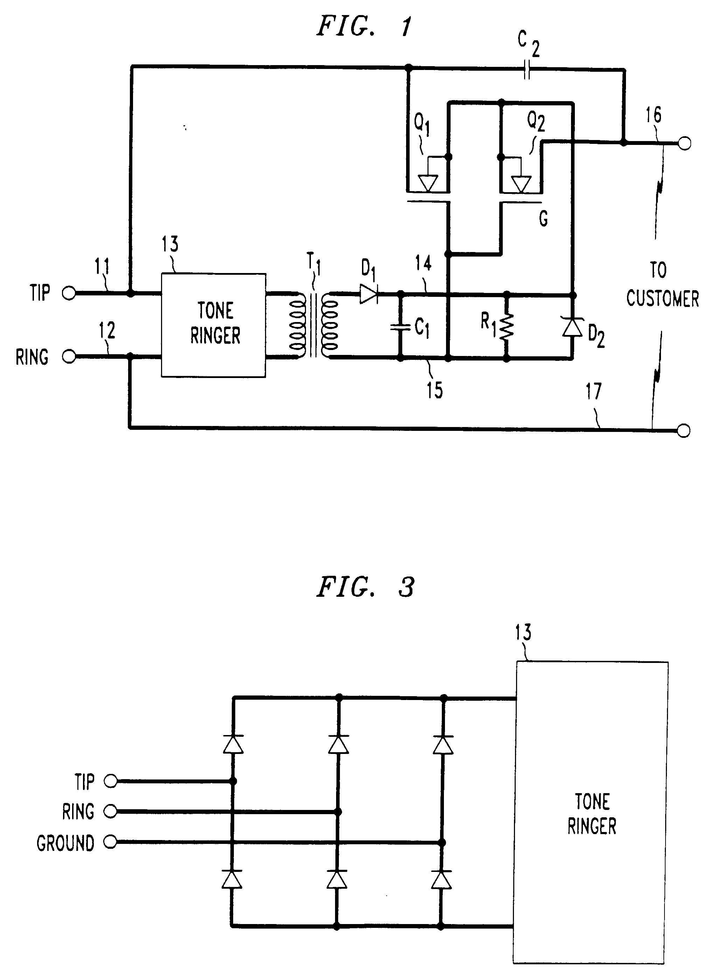

A maintenance termination unit embodying the invention is illustrated in FIG. 1. Data, voice, or video signals are supplied from the central office to input tip and ring conductors 11 and 12. The incoming signals are supplied to a tone ringer circuit 13. The tone ringer circuit is a commercially available circuit designed to produce an AC signal (tone) in response to a ringing signal on the lines 11 and 12. One such circuit, which is generally used to create AC tones on speakerphones, is made by Motorola under the designation MC 34017-2P.
Typically, the AC signal will have a frequency in the range 100-1000 Hz and a peak amplitude in the range 1-5 volts.

The output of the tone ringer is coupled to a transformer, T₁, which is used to isolate the remainder of the unit from voltages on the tip and ring conductors. Typically, the transformer, T₁, has a turn ratio of 1:1. The output of the transformer is coupled to a rectifying means which, in this example, is a standard silicon rectifying diode D₁.

A capacitor, C₁, has one plate coupled to conductor 14 extending from the cathode of the diode D₁ and its other plate coupled to conductor 15 extending from the secondary winding of the transformer T₁. Generally, the capacitance of C₁ should be within the range 2-10 microfarads. Coupled in parallel with the capacitor C₁ is a resistor R₁ which, for reasons to be discussed, has a resistance in the range 10-30 megohms. A zener diode D₂ is also coupled in parallel with capacitor C₁ and resistor R₁.

A pair of MOS Field Effect Transistors (MOSFETs), Q₁ and Q₂, have a common gate electrode G coupled to conductor 15 and a common source region coupled to conductor 14. The drain region of transistor Q₁ is coupled to the tip conductor 11, and the drain of transistor Q₂ is coupled to the output tip conductor 16 which is connected to the customer equipment. The transistors Q₁ and Q₂ are normally conducting, depletion mode MOSFETs. A capacitor C₂ is coupled across the two transistors Q₁ and Q₂ to minimize losses of high frequency signals through the circuit during normal transmission by providing a path which bypasses Q₁ and Q₂ for such signals. C₂ generally has a value in the range 0.1 to 1 microfarads.

During the normal operation of the customer equipment, transistors Q₁ and Q₂ will be conducting so that the circuit of FIG. 1 is transparent to the central office and customer. If, however, a service problem should develop, or if the central office merely wants to conduct a routine test, a ringing signal is transmitted from the central office and appears on conductors 11 and 12. This signal, which normally has a frequency of approximately 20 Hz and an RMS amplitude of approximately 84 RMS, is not used in the normal operation of ISDN systems. The tone ringer, 13, detects the presence of the ringing signal and, in response, produces an AC signal at its output. This signal is applied to transformer T₁ and to diode D₁ for rectification.

The rectified signal is used to quickly charge up capacitor C₁. When the voltage across the capacitor reaches a certain level, in this example approximately 2 volts, the depletion mode MOSFETs Q₁ and Q₂ will be rendered non-conductive as a result of the corresponding voltage established between the gate G and source regions of the MOSFETs. The customer is thereby cut off from the network while standard tests can be performed to determine if any problem exists in the network.

The MOSFETs will remain non-conducting for a period of time depending on the value of R₁ since the capacitor C₁ will be discharging through R₁ during this disconnect interval. It is generally desirable to keep the customer disconnected for a period of 30-180 seconds. Consequently, a resistance of R₁ in the range 6-30 megohms is appropriate. Once the capacitor C₁ has discharged below a certain level, MOSFETs Q₁ and Q₂ will resume their normal conducting state, and further tests can then be performed on the customer equipment.

The diode D₂ serves as a protector element. In the event that too much voltage is generated across conductors 14 and 15, D₂ will break over and conduct current away from the capacitor.

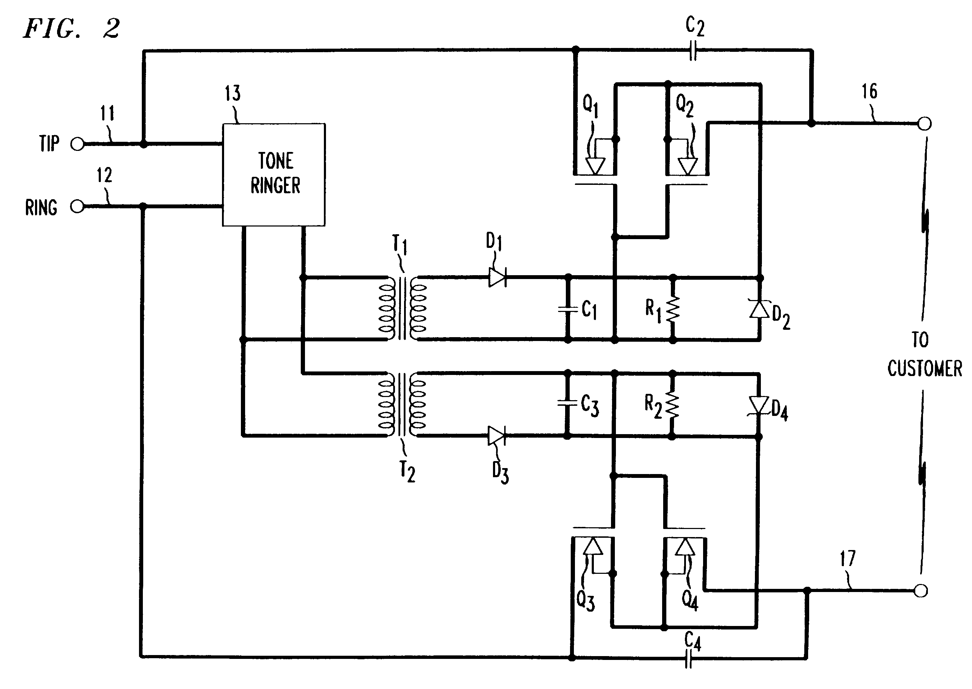

FIG. 2 illustrates an alternative embodiment where elements corresponding to those of FIG. 1 are similarly numbered. In this embodiment, a second pair of MOSFETs, Q₃ and Q₄, are coupled to the output ring conductor 17 to provide an additional switch. The additional switch is operated by a similar combination of transformer T₂ coupled to the tone ringer, 13, a rectifying diode D₃, capacitors C₃ and C₄, a resistor R₂ and a zener diode D₄. This circuit permits both central office tip and ring conductors 11 and 12 to be disconnected from the customer. The circuit will also add additional impedance to the lines, which can be minimized by the presence of capacitors C₂ and C₄ to bypass transistors Q₁ - Q₄ for high frequency signals.

Various additional modifications will become apparent to those skilled in the art. In the FIG. 2 embodiment, a single 3-winding transformer can replace the two transformers T₁ and T₂. Further, a MOSFET with one input and two outputs, each coupled to one of the output tip and ring conductors, could simplify the circuitry of FIG.2 by eliminating T_{2,} D_{3,} C₂, R₂ and D₄.

Also, as shown in FIG. 3 a bridge circuit including tip, ring, and ground conductors can be used to provide the incoming signal to the tone ringer 13. This modification would ensure that the MTU would operate even if there is a short between tip and ring by applying the signal between tip or ring and ground.

All such variations which basically rely on the teachings through which the invention has advanced the art are properly considered within the scope of the invention.

## Claims

1. A maintenance termination unit CHARACTERIZED BY means (13) responsive to a ringing signal for generating an AC signal, means (D₁) for rectifying the AC signal, a capacitor (C₁) coupled to the rectifying means, and a normally closed semiconductor switch (Q₁, Q₂) coupled to the capacitor such that when the capacitor is charged the switch will open for a period of time.

2. A unit according to claim 1 wherein the switch comprises a pair of normally conducting MOS field effect transistors (Q₁, Q₂).

3. A unit according to claim 2 wherein the MOSFETs have a common gate electrode (G₁) coupled to one plate of the capacitor (C₁), and a common source region coupled to the other plate of the capacitor.

4. A unit according to claim 3 wherein the drain of one MOSFET (Q₁) is coupled to a ring conductor (11) adapted for coupling to a central office, and the other MOSFET (Q₂) has a drain coupled to a ring conductor (16) adapted for coupling to a customer's equipment.

5. A unit according to claim 1,2,3 or 4 wherein the means for generating an AC signal comprises a tone ringer circuit (13).

6. A unit according to any preceding claim wherein the rectifying means comprises a semiconductor diode (D₁).

7. A unit according to any preceding claim comprising a transformer (T₁) coupled between the means for generating the AC signal and the means for rectifying the AC signal.

8. A unit according to any preceding claim comprising a resistor (R₁) coupled in parallel with the capacitor.

9. A unit according to claim 8 wherein the resistor has a resistance in the range 10-30 megohms.

10. A unit according to any preceding claim wherein the capacitor has a capacitance in the range 2-10 microfarads.

11. A unit according to any preceding claim comprising a tip conductor (11) and ring conductor (12), the switch being coupled to disconnect a customer from the tip conductor, and an additional switch (Q₃,Q₄) coupled to disconnect the customer from the ring conductor.

## Patentansprüche

1. Wartungs-Anschlußeinheit, gekennzeichnet durch ein auf ein Rufsignal reagierendes Mittel (13) zum Erzeugen eines Wechselstromsignals, ein Mittel (D₁) zum Gleichrichten des Wechselstromsignals, einen an das Gleichrichtemittel angekoppelten Kondensator (C₁) und einen Halbleiter-Öffnungsschalter (Q₁, Q₂), der so an den Kondensator angekoppelt ist, daß sich bei aufgeladenem Kondensator der Schalter eine Zeitlang öffnet.

2. Einheit nach Anspruch 1, wobei der Schalter ein Paar normalerweise leitender MOS-Feldeffekttransistoren (Q₁, Q₂) umfaßt.

3. Einheit nach Anspruch 2, wobei die MOSFETs eine an eine Platte des Kondensators (C₁) angekoppelte gemeinsame Gate-Elektrode (G₁) und ein an die andere Platte des Kondensators angekoppeltes gemeinsames Source-Gebiet aufweisen.

4. Einheit nach Anspruch 3, wobei der Drain eines MOSFETs (Q₁) an eine b-Ader (11) zur Ankopplung an ein Vermittlungsamt angekoppelt ist und bei dem anderen MOSFET (Q₂) ein Drain an eine b-Ader (16) zur Ankopplung an eine Teilnehmereinrichtung angekoppelt ist.

5. Einheit nach Anspruch 1, 2, 3 oder 4, wobei das Mittel zum Erzeugen eines Wechselstromsignals eine Tonweckerschaltung (13) umfaßt.

6. Einheit nach einem der vorhergehenden Ansprüche, wobei das Gleichrichtemittel eine Halbleiterdiode (D₁) umfaßt.

7. Einheit nach einem der vorhergehenden Ansprüche mit einem zwischen das Mittel zum Erzeugen des Wechselstromsignals und das Mittel zum Gleichrichten des Wechselstromsignals gekoppelten Wandler (T₁).

8. Einheit nach einem der vorhergehenden Ansprüche mit einem parallel zu dem Kondensator gekoppelten Widerstand (R₁).

9. Einheit nach Anspruch 8, wobei der Widerstand einen Widerstand im Bereich von 10-30 Megaohm aufweist.

10. Einheit nach einem der vorhergehenden Ansprüche, wobei der Kondensator eine Kapazität im Bereich von 2-10 Mikrofarad aufweist.

11. Einheit nach einem der vorhergehenden Ansprüche mit einer a-Ader (11) und b-Ader (12), wobei der Schalter zum Abtrennen eines Teilnehmers von der a-Ader gekoppelt ist und ein zusätzlicher Schalter (Q₃, Q₄) zum Abtrennen des Teilnehmers von der b-Ader gekoppelt ist.

## Revendications

1. Module de terminaison pour service d'entretien CARACTERISE PAR un moyen (13) sensible à un signal de sonnerie pour générer un signal C.A., un moyen (D₁) pour redresser le signal C.A., un condensateur (C₁) couplé au moyen de redressement, et un commutateur à semi-conducteur normalement fermé (Q₁, Q₂) couplé au condensateur de telle sorte que lorsque le condensateur est chargé le commutateur s'ouvre pendant un certain temps.

2. Module selon la revendication 1, dans lequel le commutateur comprend une paire de transistors à effet de champ MOS normalement conducteurs (Q₁, Q₂).

3. Module selon la revendication 2, dans lequel les MOSFET ont une électrode de grille commune (G₁) couplée à une plaque du condensateur (C₁), et une région de source commune couplée à l'autre plaque du condensateur.

4. Module selon la revendication 3, dans lequel le drain d'un MOSFET (Q₁) est couplé à un condensateur en anneau (11) adapté pour être couplé à un central, et l'autre MOSFET (Q₂) a un drain couplé à un condensateur en anneau (16) adapté pour être couplé au matériel d'un abonné.

5. Module selon la revendication 1, 2, 3 ou 4, dans lequel le moyen de génération d'un signal C.A. comprend un circuit de sonnerie par tonalité (13).

6. Module selon n'importe quelle revendication précédente, dans lequel le moyen de redressement comprend une diode à semi-conducteur (D₁).

7. Module selon n'importe quelle revendication précédente, comprenant un transformateur (T₁) couplé entre le moyen de génération du signal C.A et le moyen de redressement du signal C.A.

8. Module selon n'importe quelle revendication précédente, comprenant une résistance (R₁) couplée en parallèle au condensateur.

9. Module selon la revendication 8, dans lequel la résistance a une résistance dans la gamme de 10 à 30 mégohms.

10. Module selon n'importe quelle revendication précédente, dans lequel le condensateur a une capacité dans la gamme de 2 à 10 microfarads.

11. Module selon n'importe quelle revendication précédente, comprenant un conducteur de pointe (11) et un conducteur de nuque (12), le commutateur étant couplé pour déconnecter un abonné du conducteur de pointe, et un commutateur supplémentaire (Q₃, Q₄) étant couplé pour déconnecter l'abonné du conducteur de nuque.
